# EUROPEAN PATENT APPLICATION

(11) **EP 3 703 465 A1**
(43) Date of publication of application: **02.09.2020**
(21) Application number: 19159623.8
(22) Date of filing: 27.02.2019
(51) Int. Cl.: H04W 88/06, H04L 29/06, H04W 12/08

(54) **DUAL-NETWORK DUAL-SYSTEM MOBILE DEVICE BACKGROUND OF THE INVENTION**

(71) Applicant: Tsai, An-Tai, Taipei City 104 (TW)
(72) Inventor: Tsai, An-Tai, Taipei City 104 (TW)
(74) Representative: 2K Patentanwälte Blasberg Kewitz & Reichel

(57) **Abstract**

A dual-network dual-system mobile device (1) is providing in the invention. The mobile device (1) comprises a mobile network module (13), a transfer station module (12), two computer modules (10,11), a switch module (14), an HMI (15) and a case (50). The switch module (14) electronically switches the HMI (15) to one of the two computer modules (10,11) based on a switching signal, so the HMI (15) can be utilized to interact with the switching computer module (10,11). The transfer station module (12) establishes two network channels which are isolated virtually from one to the other. These two virtual channels are connected via the mobile network module (13) and mobile network (32) toward two access points (20, 21), so that one of the computer modules (10, 11) can be accessed externally via one of the two network channels. The other computer module (10, 11) can be accessed externally via the other network channel individually. The invention can improve convenience and ensure information security.

## Description

### BACKGROUND OF THE INVENTION

### Field of the invention

The invention relates to a mobile device, particually relates to the mobile device on dual-network dual-system.

### Description of the prior art

Based on data security considerations, in general, the enterprise leases a private network from a mobile telecommunication provider and conducts the confidential data communication via a private network. The aforementioned private network is completely isolated (any connected device from the public network cannot be connected to the private network) from the public network (for example: the Internet) and can avoid the attack from the public network.

In order to meet the business needs for teleworking, some enterprises lease a private network from a mobile telecommunication provider for obtaining an access point information so that employees' mobile devices (such as mobile phones or tablets) can be accessed via the access point connected to the private network for the confidential data communication.

However, the existing single SIM card mobile device can only be connected to an access point at a time and can only be connected to a single network. When the employee's mobile device is connected to the private network, the public network cannot be connected at the same time, which is inconvenient.

A dual SIM card dual standby mobile device is currently proposed. The aforementioned mobile device can simultaneously use two SIMs to be respectively connected to two APNs (for example: simultaneously connecting with an APN of the Internet and another APN of the private network) for being respectively accessed with the public network and the private network.

However, the mobile device may be attacked when connected to the public network, and infected with Trojans, computer viruses or other malicious programs, which may cause the infected mobile device to contaminate other network devices (for example, other network devices are infected with the same malicious program) on the private network when those are connected to the private network.

Additionally, the information from the Internet and the private network cannot be viewed simultaneously by the display of a mobile device (such as smartphone, laptop, tablet, etc.).

Therefore, the existing mobile devices have the aforementioned problems, and, in need, a much more effective solution is to be proposed.

### SUMMARY OF THE INVENTION

The main object of the invention is to providing a dual-network dual-system mobile device, which is capable of switching control between two independent computer modules, and providing the two aforementioned computer modules respectively through two independent network channels which are virtually isolated with each other for the external communication.

In an embodiment, a dual-network dual-system mobile device comprises a mobile network module, a transfer station module, a first computer module, a second computer module, a switch module, an HMI and a case. The mobile network module is utilized to be connected to a mobile network. The transfer station module is electronically connected to the mobile network module. The transfer station module is configured to establish a first network channel with the first access point via the mobile network, and estiblish another second network channel with the second access point via mobile network. Wherein, the first network channel and the second network channel are virtually isolated. The first computer module is electronically connected to the transer station module. The second computer module is electronically connected to the transfer station module. The switch module is electronically connected to the first computer module and the second computer module. The HMI is electronically connected to the switch module. A case at least partially covers the mobile network module, the transfer station module, the first computer module, the second computer module, the switch module and the HMI for providing protection. The HMI is electronically switched to the first computer module by the switch module when the switch module receives a first switching signal so that the HMI is utilized to interact with the first computer module. And the HMI is electronically switched to the second computer module by the switch module when the switch module receives a second switching signal so that the HMI is utilized to interact with the second computer module. The transfer station module is configured to enable the first computer module to communicate externally via the first network channel, and the second computer module only communicates externally via the second network channel.

In an embodiment, the first computer module comprises a first main memory, a first storage and a first processor. The first storage stores a first operating system. The first processor is electronically connected to the first main memory and the first storage. The first processor is configured to upload the first operating system into the first main memory and run the first operating system. The second computer module comprises a second main memory, a second storage and a second processor. The second storage stores a second operating system. The second processor is electronically connected to the second main memory and the second storage. The second processor is configured to upload the second operating system into the second main memory and run the second operating system.

In an embodiment, the first computer module further comprises a first transceiver and a first I/O controller. The first transceiver is electronically connected to the first processor and the transfer station module. The first I/O controller which is utilized to control the HMI is electronically connected to the first processor and the switch module. The second computer module further comprises the second transceiver and the second I/O controller. The second transceiver is electronically connected to the second processor and the transfer station module. The second I/O controller which is utilized to control the HMI is electronically connected to the second processor and the switch module.

In an embodiment, the mobile network module comprises a connector. The connector is utilized to be connected to an external wireless data modem via a wired transmission cable. The mobile network module is connected to the mobile network via the wireless data modem.

In an embodiment, the transfer station module is configured respectively to allocate the first access point parameter to the first computer module, and allocate the second access point parameter to the second computer module. The transfer station module is connected to the first access point based on the first access point parameter, and is connected to the second access point based on the second access point parameter. The first access point parameter is utilized to be an address indicating the first access point connected to the Internet. The second access point parameter is utilized to be an address indicating the second access point connected to the private network.

In an embodiment, the mobile network module which can be configured with a user identity recognition module is connected to the mobile network by running a user identity recognition module.

In an embodiment, the transfer station module is configured to obtain the network access point information from the user identity recognition module and is configured with a first access point parameter based on the network access point information.

In an embodiment, the HMI is configured to receive a new access point operation. The transfer station module is configured with and allocates the second access point parameter based on the newly added access point operation, and issues an alert via the HMI when detecting that second access point indicated by the second access point parameter (which is allocated to the second computer module) is connected with the Internet.

In an embodiment, a dual-network dual-system mobile device further comprises a switch interface that is electronically connected to the switch module. The switch interface is utilized to receive the switching operation for triggering correspondingly a first switching signal or a second switching signal.

In an embodiment, the switch interface is a physical key or proximity sensor, based on the user pressing/sensing sequence, triggers cyclically the first switching signal and the second switching signal in sequence. The HMI comprises an input component and an output component.

In an embodiment, the output component is a display component. When one of the two computer modules of the dual-network dual-system mobile device is activated and the other is in shutdown state, the output component of the activated computer module displays a full screen-display which comprises a status bar and a main frame.

In an embodiment, the output component is a display component. The switch module receiving the first switching signal is controlled to electronically switch the HMI to the first computer module, and the output component is controlled to display the main frame of the first computer module in a display area, and the status bar of the first computer module in another display area, and the status bar of second computer module in another display area.

In an embodiment, the output component is a display component. The switch module receiving the second switching signal is controlled to electronically switch the HMI to the second computer module, and the output component is controlled to display the main frame of the second computer module in a display area, and the status bar of the second computer module in another display area, and the status bar of first computer module in another display area.

In an embodiment, the first switching signal, second switching signal and third switching signal in sequence are cyclically triggered by the switch interface. The switch module receiving the third switching signal is controlled to electronically switch the HMI to the first computer module or the second computer module, and the output component is controlled to display the main frame of the first computer module in a display area, and the status bar of the first computer module in another display area, and the main frame of the second computer module in another display area, and the status bar of second computer module in another display area.

In an embodiment, the switch module comprises an output switching circuit and an input switching circuit. One endpoint of the output switch circuit is connected to an output component of HMI and the other endpoint of the output switch circuit is connected to the output components of first computer module and second computer module. One endpoint of the input switch circuit is connected to an input component of the HMI and the other endpoint of the input switch circuit is connected to the input components of first computer module and second computer module.

In an embodiment, the HMI comprises a display component. A dual-network dual-system mobile device also comprises a controller module. The controller module is utilized to obtain the status information from the first computer module and the second computer module from time to time, and control the display component to display the status bar of the second computer module in a display area when the HMI is electronically switched to the first computer module by the switch module, and control the display component to display the status bar of the first computer module in another display area when the HMI is electronically switched to the second computer module by the switch module.

The invention is mainly for elevating the user information sucurity of second computer module and improving the convenicne.

### BRIEF DESCRIPTION OF THE DRAWING

Fig. 1 illustrates a block diagram of a dual-network dual-system mobile device according to a preferred embodiment of the invention.
Fig. 2 illustrates a block diagram of a first computer module according to another preferred embodiment of the invention.
Fig. 3 illustrates a block diagram of a second computer module according to still another preferred embodiment of the invention.
Fig. 4 illustrates a block diagram of dual-network dual-system mobile device according to still another preferred embodiment of the invention.
Fig. 5 illustrates a block diagram of dual-network dual-system mobile device according to still another preferred embodiment of the invention.
Fig. 6 illustrates a block diagram of dual-network dual-system mobile device according to still another preferred embodiment of the invention.
Fig. 7 illustrates a block diagram of dual-network dual-system mobile device according to still another preferred embodiment of the invention.
Fig. 8 illustrates a block diagram of dual-network dual-system mobile device according to still another preferred embodiment of the invention.
Fig. 9 illustrates a schematic view of full screen-display according to still another preferred embodiment of the invention.
Fig. 10 illustrates a schematic view of switching to a first screen-display according to still another preferred embodiment of the invention.
Fig. 11 illustrates a schematic view of switching to a second screen-display according to still another preferred embodiment of the invention.
Fig. 12 illustrates a schematic view of switching to a third screen-display according to still another preferred embodiment of the invention.

### DETAIL DESCRIPTION OF THE INVENTION

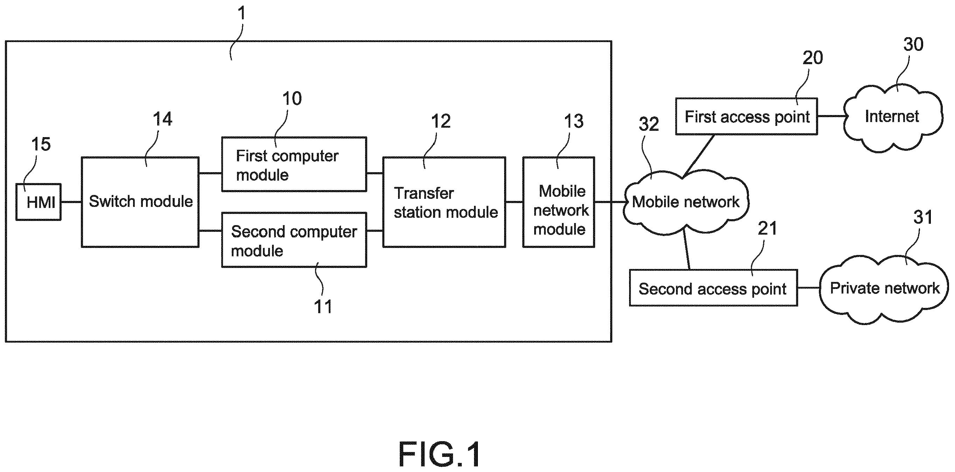

Referring to the drawings illustrating a preferred embodiment of the invention, the detail is described as follows:
Firstly, refer to Fig. 1, this figure illustrating a block diagram of a dual-network dual-system mobile device 1 according to a preferred embodiment of the invention.

As shown in the drawing, the invention proposes a dual-network dual-system mobile device 1 (for example: a smartphone) and deploys two mutually independent computer modules (10,11) inside a single mobile device so that the two mutually independent computer modules (10,11) can communicate respectively and externally through two network channels which are virtually isolated with each other.

More specifically, the dual-network dual-system mobile device 1 comprises a first computer module 10, a second computer module 11, a transfer station module 12, a mobile network module 13, a switch module 14 and an HMI 15.

The first computer module 10 and the second computer module 11 are mutually independent computer modules. Further, the first computer module 10 and the second computer module 11 are respectively a mini computer system (for example: a single chip system) or a mobile computer system (for example a computer system integrated on a single electronic circuit board) and have respectively their own computer components such as memory, storage, processor, software, etc.

Additionally, the first computer module 10 and the second computer module 11 can be controlled by the user (for example: via an HMI 15) to execute an assignment application (for example: send/receive an email, edit file, send/receive file, etc.)

The mobile network module (13) is utilized to be connected to the mobile network (32) (such as a cellular network of a mobile telecommunication provider or other network with similar architecture; or a private hot-spot of an enterprise or other network with similar architecture), and is connected to the designated access point (20,21) (such as an APN of a mobile communication provider or a private network equipment of an enterprise having the similar function as APN equipment) via the mobile network (32) to connect to the data network (such as the Internet 30 or a private network 31, which will be described later) via the connected access point (20,21) for data communication.

In an embodiment, the mobile network module 13 comprises a wireless data module (not shown in this figure). The wireless data module can be configured with a user identity recognition module 131. The mobile network module 13 can be connected to the mobile network 32 via the wireless data module.

In an embodiment, the mobile network module 13 includes a MAC address (not shown, the MAC address information registered in a private networking equipment of an enterprise can obtain the access authority) of a WAN port and a Wi-Fi modem module (not shown). The mobile network module 13 is connected to the mobile network 32 by running the aforementioned MAC address via the Wi-Fi modem module to obtain the access authority from the Wi-Fi hotspot. It is worth mentioning that the mobile network module 13 is configured to only accept the access authority of the aforementioned enterprise Wi-Fi hotspot but not accept access authority of another Wi-Fi hotspot.

One endpoint of the transfer station module 12 is electronically connected to the mobile network module 13 and the other endpoint of the transfer station module 12 is electronically connected to the first computer module 10 and the second computer module 11. The transfer station module 12 can be configured to control the mobile network module 13 to be simultaneously connected to multiple data networks via the connected multiple access points (20,21).

For example, the transfer station module 12 can be configured to control the mobile network module 13 to be simultaneously connected to the first access point 20 (such as an APN equipment providing the connection service of the Internet 30) and the second access point 21 (such as another APN equipment providing a connection service of the private network 31). Therefore, the transfer station module 12 can be configured to control the mobile network module 13 to establish a first network channel with the Internet 30 via the first access point 20, and simultaneously establish a second network channel with the private network 31 via the second access point 21. The second network channel is virtually isolated from the first network channel.

It is worth mentioning that, in the invention, each established network channel is configured to be only utilized by a designated computer module, and other computer modules cannot share the aforementioned network channel. For example: if the first network channel is configured to be utilized by the first computer module 10 and the second network channel is configured to be utilized by the second computer module 11, then the first computer module 10 is prohibited from utilizing the second network channel to connect to the second access point 21 and the private network 31, meanwhile, the second computer module 11 is also prohibited from utilizing the first network channel to connect to the first access point 20 and the Internet 30.

The HMI 15 (for example, any combination set of input components and output components such as key board, display, speaker, microphone, indicator light, touch screen, etc.) is utilized to receive user operations to trigger corresponding signals, and can output information (such as display Screen or play sound), therefore the user can operate the designed computer module for interacting.

One endpoint of switch module 14 (for example: KVM module) is electronically connected to the first computer module 10 and the second computer module 11. The other endpoint of switch module 14 is electronically connected to the HMI 15. The HMI 15 is switched to connect with one of multiple computer modules and is switched to disconnect with the other computer modules by the switching action provided by switch module 14 based on a switching signal.

For example: the HMI 15 is electronically connected with the first computer module 10 and disconnected with the second computer module 11 by the switch module 14 when the switch module 14 receives a first switching signal so that the HMI 15 can interact with the first computer module 10 but not interact with the second computer module 11. Additionally, the HMI 15 is electronically connected with the second computer module 11 and disconnected with the first computer module 10 by the switch module 14 when the switch module 14 receives a second switching signal so that HMI 15 can interact with the second computer module 11 but not interact with the first computer module 10.

In an embodiment, in addition to the aforementioned input and output components, the first computer module 10 may further comprise one or more connection components (not shown in this figure, the connection component may be a USB connection component, a Wi-Fi connection component, a Bluetooth connection component, etc.). The aforementioned connection components can be utilized to be connected to an external device for data access (such as connected to a wired storage device via a USB connection component for reading and writing a data stored in a wired storage device, or connected to the wireless storage device via a Wi-Fi connection component or a Bluetooth connection component for reading and writing a data stored in a wireless storage device.)

In an embodiment, the second computer module 11 is not configured to have any of the aforementioned connection components to avoid infecting malicious programs via the connection devices. Therefore, the information security level is improved.

In an embodiment, when the HMI 15 comprises multiple components, the switch module 14 is configured to switch only a designated component to electronically connect with a connected computer module. For example: when the HMI 15 is switched to the first computer module 10 with lower requirements on the information security level, all components (for example: output/input components) of the HMI 15 can be electronically connected to the first computer module 10, therefore the first computer module 10 can have the most complete interactive function. When the HMI 15 is switched to the second computer module 11 with higher requirements on the information security level, only some components (for example: partial output/input components) of the HMI 15 are allowed to be electronically connected to the second computer module 11, therefore the second computer module 11 can have the safest execution environment.

It is worth mentioning that when the HMI 15 is switched to second computer module 11 with higher requirements on the information security level, the first computer module 10 is still able to operate normally or send and receive emails or enter a standby state. In addition, when the HMI 15 is switched to the first computer module 10 with lower requirements on the information security level, the second computer module 11 is still able to operate normally or receive messages but does not enter standby, hibernation or shutdown such that instant notification, such as intrusion into family alarms/images, company messages, etc., can still be received.

The invention is to operate a plurality of computer modules by turns through an HMI 15, therefore eliminating the cost of adding multiple sets of HMIs and reducing the volume size of the device.

Additionally, in the example of Fig 1, the first computer module 10 and the second computer module 11 are mutually independent and utilize respectively the two network channels which are virtually isolated with each other. When a user switches and operates the first computer module 10 through the switch module 14 to browse the Internet 30, the daily access requirement of the Internet can be met. When the user switches and operates the second computer module 11 through the switch module 14, the highest secret information can be processed in the safest environment, and the first computer module 10 can be effectively prevented from infecting the malicious component to the second computer module 11, and the second computer module 11 is prevented from being infected with the malicious program from the Internet 30.

The invention deploys two computer modules (10,11) in a single mobile device for users to switch and operate the two computer modules (10,11) by turns by using the same HMI 15, which can eliminate the trouble of necessarily carrying two mobile devices in the past, and can greatly improve conveniently the operation of the mobile device.

The invention deploys two mutually independent computer modules (10,11) in a single mobile device so that the computer modules (10,11) are respectively connected to the virtual networks that are mutually isolated in order to prevent the computer modules (10,11) from mutually infecting malicious programs, thus greatly improve information security level.

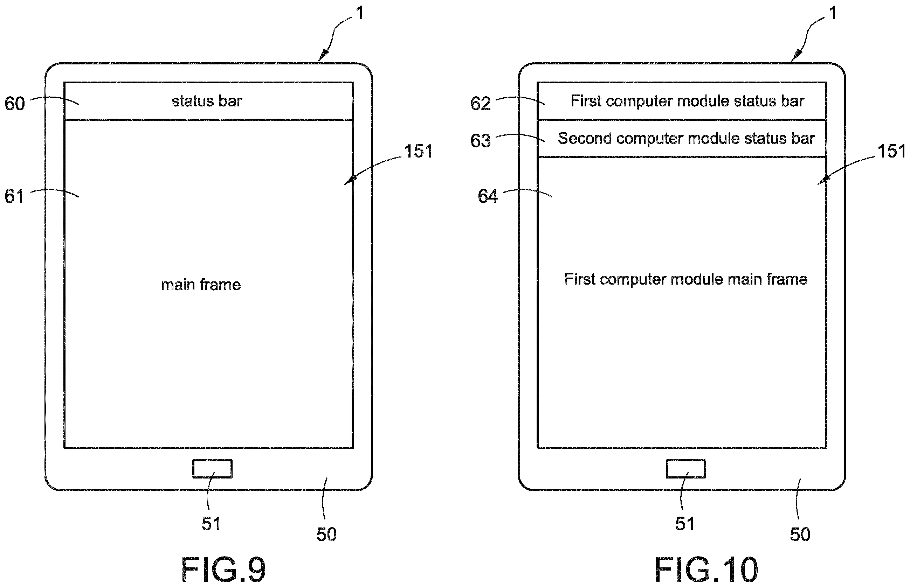

In an embodiment, the dual-network dual-systems device 1 also comprises a case (such as the case 50 shown in Fig. 9). The case 50 may cover all of the components of the dual-network dual-system mobile device 1, or part of/all of the partial components of the dual-network dual-system mobile device 1 to provide protection in different levels.

In an embodiment, the transfer station module 12 can be configured with a first access point parameter (for example: APN parameter) and a second access point parameter (for example: another APN parameter). The first access point 20 is allocated to the first computer module 10 and the second access point 21 is allocated to the second computer module 11. After the mobile network module 13 is connected to the mobile network 32 (for example: be connected to the mobile network via a neighborhood based station), the transfer station module 12 can configure, based on the first access point parameter, the mobile network module 13 to set up a communicative connection with the first access point 20 , and can configure, based on the second access point parameter, the mobile network module 13 to set up a communicative connection with the second access point 21.

In an embodiment, the first access point 20 is to be connected with the Internet 30 and the second access point 21 is to be connected with the private network 31. The first access point parameter is utilized to be an address (for example: www address, IP address, connection protocol and/or User name/password, etc.) indicating the first access point 20 (for example: a mobile telecommunication provider's access point of the Internet 30). The second access point parameter is utilized to be an address (for example: www address, IP address, connection protocol and/or User name/password, etc.) indicating the second access point 21 (for example: the access point of the private network from a mobile telecommunication provider).

In an embodiment, the HMI 15 can be configured to receive a new access point operation (for example: user inputs the detailed information of the first access point parameter and the second access point parameter), and the transfer station module 12 can configure and allocate the first access point parameter and the second access point parameter based on the newly added access point operation.

In an embodiment, when the first access point parameter has been configured, the transfer station module 12 automatically configures the second access point parameter which is utilized to be connected to the private network 31 and the configuration is based on the newly added access point operation (for example: user only inputs a second access point parameter described in later).

In an embodiment, if the second computer module 11 is configured to prohibit from connecting with the Internet 30, the transfer station module 12 can be configured to perform a filtering function. More specifically, the transfer station module 12 can be configured to issue an alert via HIM 15 when detecting that the second access point 21 indicated by the second access point parameter (which is allocated to the second computer module 11) is connected with the Internet, and further prohibit the second access point parameter. Therefore, this invention avoids increasing additional risk of data security when the second computer module 11 erroneously connects to the Internet 30.

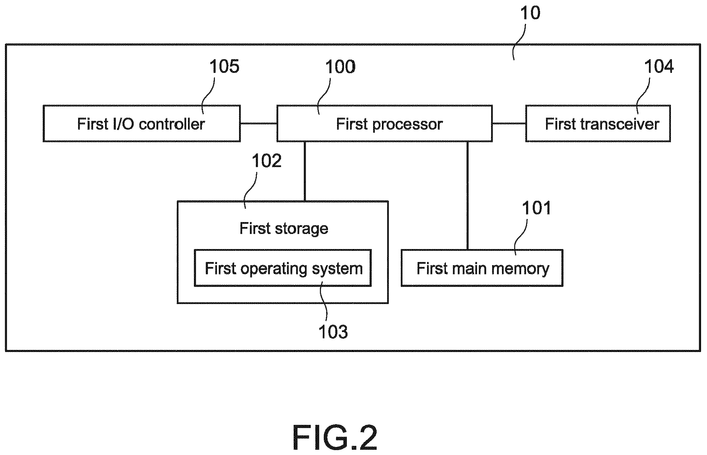

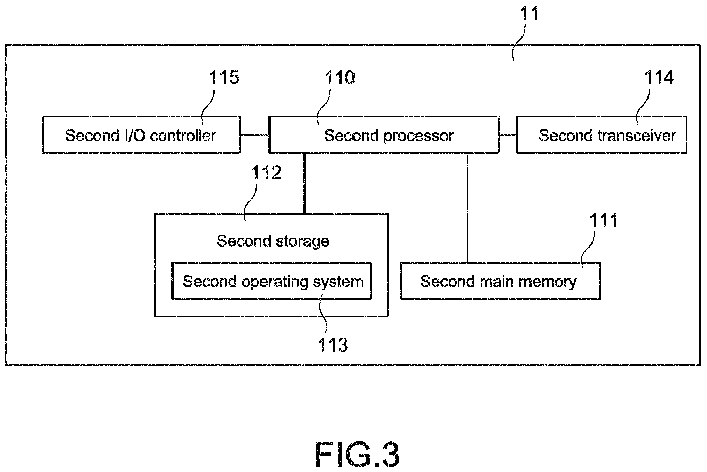

Please refer to Fig. 1 to Fig. 3 simultaneously. Fig. 2 illustrates a block diagram of a first computer module according to another preferred embodiment of the invention. FIG. 3 also illustrates a block diagram of a second computer module according to still another preferred embodiment of the invention.

In an embodiment, the first computer 10 comprises a first main memory 101, a first storage 102, a first transceiver 104, a first I/O controller 105 and a first processor 100 that is electronically connected to the aforementioned components.

The first main memory 101 (for example: RAM or flash memory) comprises a temporary memory (for example: a transient memory) and is utilized as temporarily store programs that are being executed or to be executed, as well as data that is being accessed or to be accessed. The first storage 102 comprises permanent memory (for example: non-transitory memory) and is utilized to store programs or data for a long period of time, such as storing the first operating system 103.

The first transceiver 104 is electronically connected to the transfer station module 12, and is utilized to forward data to the outside (for example: converting to a format recognizable by the transfer station module 12 and the mobile network module 13), and can parse the data received from the outside via the transfer station module 12 and the mobile network module 13.

The first I/O controller 105 is electronically connected to the switch module 14 and is utilized to control HMI 15. More specifically, the first I/O controller 105 comprises one or more controllers (not shown). The driver of each controller can be installed for the designated component of HMI 15 and is utilized to control respectively the designated components of HMI 15.

For example, the first I/O controller 105 can comprise a display processor, a touch controller and/or a storage controller. When the first computer module 10 is switched to the HMI 15, the display processor of the first I/O controller 105 is utilized to control a screen-display or a display parameter of the display component of the HMI 15, the touch controller is utilized to control a triggered signal or triggered parameter of touch panel of touch screen, or the storage controller is utilized to control and access an external storage device of a connected connection component, but this specific example is not intended to limit the scope of the present disclosed example.

In an embodiment, the second computer 11 comprises a second main memory 111, a second storage 112 (can store a second operating system 113), a second transceiver 114, a second I/O controller 115 and a second processor 110 that is electronically connected respectively to the aforementioned components.

The second main memory 111, the second storage 112, the second operating system 113, the second transceiver 114, the second I/O controller 115 and the second processor 110 electronically connected to the aforementioned components have respectively the operation and function same as or similar to that of the first main memory 101, the first storage 102, the first operating system 103, the first transceiver 104, the first I/O controller 105 and the first processor 100 electronically connected to the other components of the first computer module 10. Here the description for the operation and the function of the components in the second computer 11 are omitted for brevity.

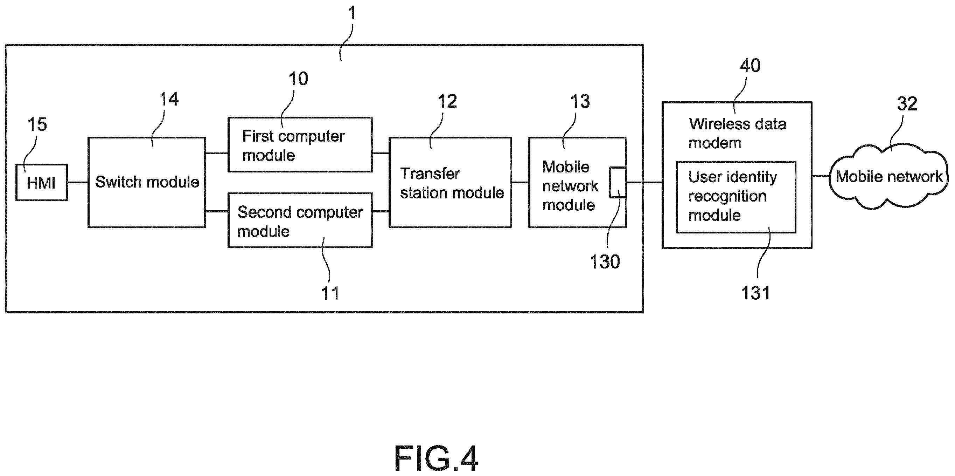

Please refer to Fig. 4, this figure illustrating a block diagram of a dual-network dual-system mobile device according to another preferred embodiment of the invention.

In an embodiment, the mobile network module 13 must be connected to the mobile network 32 via a wireless data modem 40 and the mobile network module 13 cannot be connected directly to the mobile network 32. More specifically, the mobile network module 13 can comprise a connector 130 (It could be as a wired or wireless connection component such as Wi-Fi, Bluetooth, RJ-45 or USB etc.; as a wired connection component, it could be female connection component), and can be wired (for example: USB cable or network cable so that the endpoint of the aforementioned cables, a male connector, is adopted to the aforementioned female connector 130) or wireless (for example: Wi-Fi Protocol or Bluetooth protocol) connected to the wireless data modem 40 via the connector 130, and then the mobile network module 13 can be connected to the mobile network 32 via the wireless data modem 40.

Further, the wireless data modem 40 is configured with a user identity recognition module 131 and is connected to the mobile network 32 by running the user identity recognition module 131. The aforementioned user identity recognition module 131 could be physical SIM card of arbitrary size or embedded e-SIM (soft SIM), but this specific example is not intended to limit the scope of the present disclosed example. More specifically, the wireless data modem 40 can be utilized to parse the user identity information of the user identity recognition module 131, and register the user identity information with the mobile network 32 (for example: base station) to obtain a network access authority.

In an embodiment, the wireless data modem 40 can be utilized to obtain the access point name information from the user identity recognition module 131 (for example: the mobile telecommunication provider provides APN information for the Internet access), and based on the access point name information the wireless data modem 40 is configured with the first access point parameter which is utilized to be connected to the Internet 30.

Further, when the first access point parameter has been configured, the transfer station module 12 automatically configures the second access point parameter which is utilized to be connected to the private network 31 and the configuration is based on the newly added access point operation (for example: user only inputs the detailed information of the second access point parameter).

It is worth mentioning that the mobile network module 13 may not have the mobile Internet access capability (for example: only Wi-Fi Internet access or wired connection). Alternatively, the mobile network module 13 does not support the local mobile network bands (for example: 700MHz) or newer communication standards (such as LTE-Advanced communication standard or 5G communication standard). In such cases, the invention is to obtain smoothly the best network quality from the mobile network 32 when the connector 130 (which supports the aforementioned frequency bands or communication standard) is connected to the wireless data modem 40.

The mobile network module 13 comprises a connector 130. The connector 130 is utilized to be externally connected to a wireless data modem 40 via a transmission cable, and then the mobile network module 13 is utilized to be connected to the mobile network 32 via the wireless data modem 40.

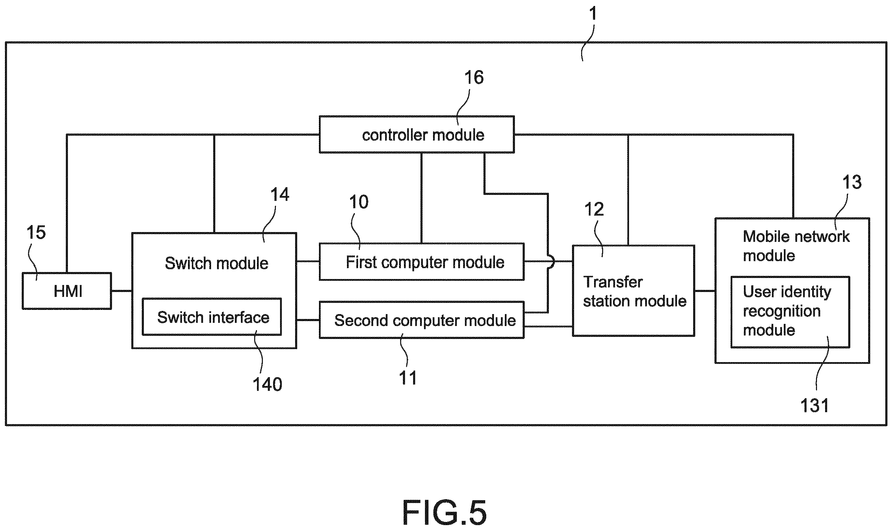

Please refer to Fig. 5, this figure illustrating a block diagram of a dual-network dual-system mobile device according to another preferred embodiment of the invention.

In this embodiment, the mobile network module 13 can be configured with a user identity recognition module 131 (SIM), and be connected to the mobile network 32 by running the user identity recognition module 131. The aforementioned user identity recognition module 131 may be physical SIM card with arbitrary size or an embedded SIM (e-SIM) card, but this specific example is not intended to limit the scope of the present disclosed example. More specifically, the mobile network module 13 can be utilized to parse the user identity data in the user identity recognition module 131, and register the user identity data with the mobile network 32 (for example: a base station) for obtaining the network access authority.

In an embodiment, the mobile network module 13 can be utilized to obtain the network access point name information from the user identity recognition module 131 (for example: the APN information of the Internet is provided by the current mobile telecommunications provider), and based on the access point name information the mobile network module 13 is configured with the first access point parameter to be connected to the Internet 30.

In an embodiment, the dual-network dual-system mobile device 1 may further comprise a switch interface 140 (which may be as any combination set of physical keys, virtual keys or a proximity sensor, a fingerprint sensor, a camera, etc.). The switch interface 140 is electronically connected to the switch module 14, and is configured to receive a switching operation of the user, and then triggers a corresponding switching signal (such as the first switching signal and the second switching signal, and/or a third switching signal to be described later).

For example, when the switch interface 140 is implemented as a single physical key or a proximity sensor, the trigger method based on the user pressing/sensing in sequence may trigger switching signals cyclically in sequence (such as triggering the first switching signal upon sensing the first press/the first time of approaching object, and triggering the second switching signal upon sensing the second press/the second times of approaching object, and triggering the third switching signal upon sensing the third press/the third times of approaching object, and triggering the fourth switching signal upon sensing the fourth pressing/the fourth times of approaching object, and so on).

When the switch interface 140 is implemented as a plurality of virtual keys, the trigger method may trigger a corresponding switching signal based on the way user pressing the key. (for example: the first switching signal is triggered when the first key is pressed, and the second switching signal is triggered when the second key is pressed, and the third switching signal is triggered when the third key is pressed.)

When the switch interface 140 is implemented as a fingerprint sensor or a camera, the trigger method may trigger a corresponding switching signal based on the sensing/photographing object. (for example, when sensing the fingerprint of the first finger/ the first object is photo captured, the first switching signal is triggered. When sensing the fingerprint of the second finger/ the second object is photo captured, the second switching signal is triggered. When sensing the fingerprint of the third finger/ the third object is photo captured, the third switching signal is triggered.)

Therefore, the invention can be utilized for a user to quickly switch the computer module to be operated for improving the user experience.

In an embodiment, the dual-network dual-system mobile device 1 may further comprise a controller module 16. The controller module 16 is electronically connected to all modules of the dual-network dual-system mobile device 1 (such as the first computer module 10, the second computer module 11, the transfer station module 12, the mobile network module 13, the switch module 14, and the HMI 15) and is utilized to control the operation of each aforementioned module.

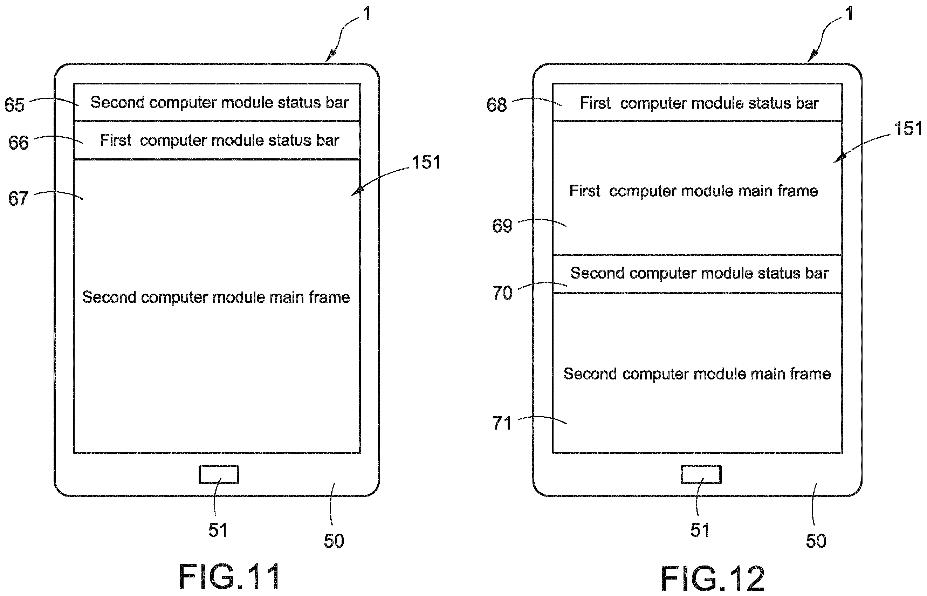

For example, the controller module 16 can be utilized to control each module to be enabled or disabled; to control the mobile network module 13 to access the information of the user identity recognition module 131 which is registered with the mobile network 32; to control the transfer station module 12 so that the first computer module 10 and the second computer module 11 are respectively configured with the different designated network channels; to control the switch module 14 to switch the HMI 15 to the current electronically-connected computer module; and to control the screen-display of HMI 15 (as shown in Fig. 9 ∼ Fig. 12).

In an embodiment, the controller module 16 can be utilized to obtain the real-time status information from the first computer module 10 and the second computer module 11 (but cannot directly control the first computer module 10 and the second computer module 11 for ensuring information security), and display the aforementioned real-time status information on the screen-display of the HMI 15 (as shown in Figs. 10 to 12).

Therefore, the user can know the real-time status information of the other computer module regardless of whether the first computer module 10 or the second computer module 11 is being operated, and the user experience can be improved effectively.

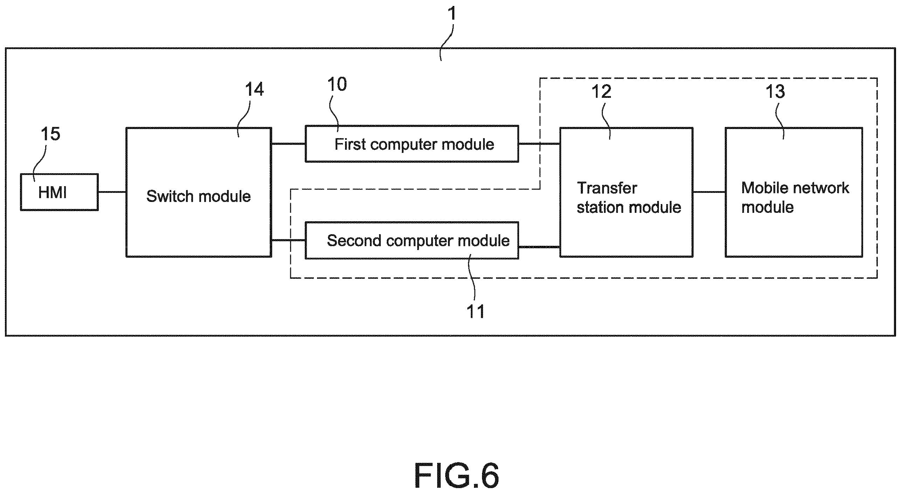

Please refer to Fig. 6, this figure illustrating a block diagram of a dual-network dual-system mobile device according to another preferred embodiment of the invention.

In this embodiment, the transfer station module 12, the mobile network module 13, and the second computer module 11 with a high security level are integrated into the same module (such as the same circuit board). Furthermore, the second computer module 11 is utilized to control the dual-network dual-system mobile device 1 (for example, the second computer module 11 is utilized to achieve the function of the controller module 16 of Fig. 5). Therefore, the invention can save the controller module 16 and achieve the technical effect of reducing the number of devices and reducing the cost of the devices.

Additionally, the second computer module 11 with a higher security level that is connected to the mobile network 32 via the aforementioned integrated module, the second computer module 11 can be connected to the Internet 30 via the first access point 20. In such case, the second computer module 11 only transfers the information between the first computer module 10 and the first access point 20 by running the transfer station module function, and will not be attacked by computer viruses and malicious programs from the Internet 30 and the first computer module 10.

It is worth mentioning when comparing with the first computer module 10 with high risk of infecting a malicious program which is utilized to control the dual-network dual-system mobile device 1, the invention is configured with the second computer module 11 with a higher security level which is utilized to control the dual-network dual-system mobile device 1 and can have a better level of information security.

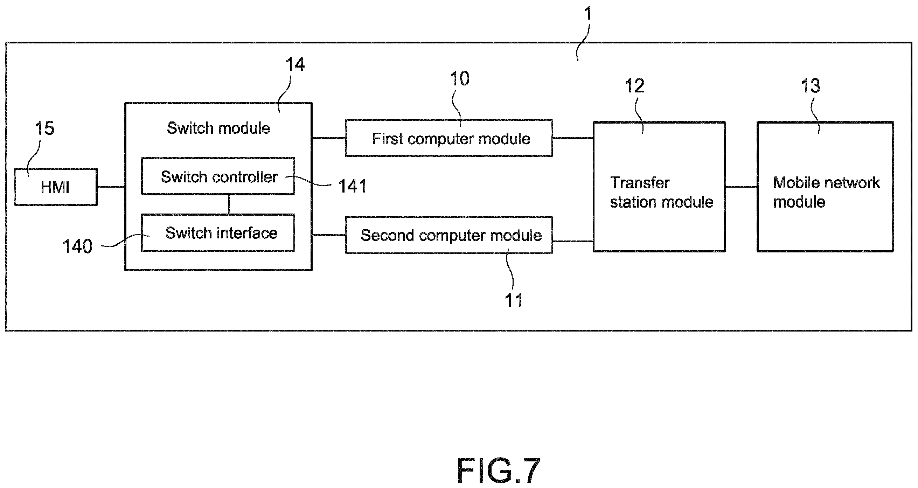

Please refer to Fig. 7, this figure illustrating a block diagram of a dual-network dual-system mobile device according to another preferred embodiment of the invention.

In an embodiment, the switch module 14 includes a switch interface 140 and a switch controller 141, which are electronically connected with each other. The switch controller 141 which is utilized to control the dual-network dual-system mobile device 1 performs the same as the function of the controller module 15 in the Fig 5.

Additionally, since the switching module 14 has simultaneously connected the first computer module 10 and the second computer module 11, in this embodiment, the switch controller 141 does not need any extra electronic circuit layout to be connected to the two computer modules (10,11) when comparing with the diagram of the controller module 16 in the Fig 5. In the other word, the switch controller 14 can be utilized to obtain the information from the first computer module 10 and the second computer module 11 at any time.

Therefore, the invention can save the controller module 16 and simplify the electronic circuit layout to achieve the technical effect of reducing the volume size and cost of the device.

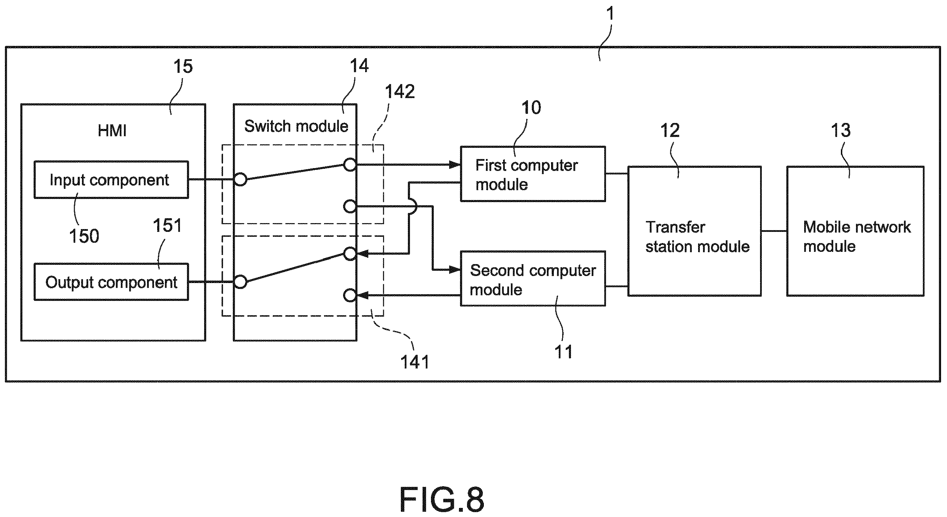

Please refer to Fig. 8, this figure illustrating a block diagram of a dual-network dual-system mobile device according to another preferred embodiment of the invention.

In this embodiment, the HMI 15 comprises an input component 150 (such as a touchpad or a key set) and an output component 151 (such as a display). Moreover, the switch module 14 is further utilized to provide an independent input/output switching function for individually switching the input/output of each computer module.

More specifically, the switch module 14 comprises an output switch circuit 141 and an input switch circuit 142. The output switch circuit 141 and the input switch circuit 142 are electronically connected to a switch controller and the switching thereof is controlled by the switch controller. One endpoint of the output switch circuit 141 is connected to the output component 151 (such as a display component), and the other endpoint of the output switch circuit 141 is connected to the output endpoint of the first computer module 10 and the second computer module 11 (such as a display connection component). One endpoint of the input switch circuit 142 is connected to the input component 150 (such as a touch panel, key board), and the other endpoint of the output switch circuit 141 is connected to the input endpoint of the first computer module 10 and the second computer module 11 (such as an input connection component).

In this embodiment, the user can specify the computer module respectively to which the output component 151 and the input component 150 are to be connected.

For example, the user can specify that the output component 151 is connected to the output endpoint of the second computer module 11 for displaying the full screen-display of the second computer module 11 and at the same time specify that the input component 150 is connected to the input endpoint of the first computer module 10 for inputting to the first computer module 10.

In another example, the user can specify that the output component 151 is simultaneously connected to the output endpoints of the first computer module 10 and the second computer module 11 for simultaneously displaying the full screen-display (As shown in Fig. 12) of the first computer module 10 and the second computer module 11, and specify simultaneously that the input component 150 is connected to the input endpoint of the second computer module 11 for proceeding to input to the second computer module 11. Therefore, the invention allows the user to simultaneously view the screen-display of all the plurality of computer modules and simultaneously operate a designated computer module.

Please refer to Fig 9 to Fig 12. Fig. 9 illustrates a full screen-display according to another preferred embodiment of the invention. Fig. 10 illustrates a schematic view of switching to a first screen-display according to another preferred embodiment of the invention. Fig. 11 illustrates a schematic view of switching to a second screen-display according to another preferred embodiment of the invention. Fig. 12 illustrates a schematic view of switching to a third screen-display according to another preferred embodiment of the invention.

In the embodiment, the dual-network dual-system mobile device 1 comprises a case 50 which is utilized to provide a protected case 50. The switch interface 140 is, for example, a key 51. The output component 151 of the HMI 15 is, for example, a display component. The control module (such as the controller module 16 of Fig. 5 or the second computer module 11 of Fig. 6 or the switch controller 141 of Fig 7) of the dual-network dual-system mobile device 1 can obtain the instant status information from the first computer module 10 or the second computer module 11 regardless of whether the first computer module 10 or the second computer module 11 is switched to HMI 15, which is selectively displayed on the output component 151 after being processed.

In an embodiment, the output component 151 is, for example, a display component, as shown in Fig. 9. When one computer module of the dual-network dual-system mobile device 1 is activated and the other is in shutdown state, the output component 151 of the activated computer module is utilized to display a full screen-display which comprises a main frame 61 and a status bar 60 (such as time, wireless link icon, battery status, instant notification, etc.).

In an embodiment, the output component is, for example, a display component. When the two computer modules (10,11) of the dual-network dual-system mobile device 1 are both activated, the screen-display of the output component is described as follows:
As shown in Fig. 10, when a user presses the key 51 and a first switching signal is triggered, the controller module can be utilized to control the switch module 14 to switch the HMI 15 to the first computer module 10, and control the output component 151 to display the main frame of the first computer module 10 in the display zone 64, and display the status bar of the first computer module 10 in the display zone 62. Additionally, the controller module can simultaneously control the output component 151 to display the status bar of the second computer module 11 in the display zone 63. Therefore, when a user interacts with the first computer module 10, the user will know any real-time status information from the second computer module 11 at the same time.

As shown in FIG. 11, when the user presses the key 51 again and the second switching signal is triggered, the controller module can be utilized to control the switch module 14 to switch the HMI 15 to the second computer module 11, and control the output component 151 to display the main frame of the second computer module 11 in the display zone 67, and display the status bar of the second computer module 11 in the display zone 65. Furthermore, the controller module can simultaneously control the output component 151 to display the status bar of the first computer module 10 in the display zone 66. Therefore, when the user interacts with the second computer module 11, the user knows the real-time status information from the first computer module 10 at the same time.

As shown in Fig. 12, when the user presses the key 51 again and the third switching is triggered, the controller module can be utilized to control the switch module 14 to arbitrarily switch the HMI 15 to the first computer module 10 or the second computer module 11, and control the output component 151 simultaneously to display the main frames and status bars of the first computer module 10 and the second computer module 11. For example, the controller module can be utilized to control the output component 151 to display the status bar of the first computer module 10 in the display zone 68, and display the main frame of the first computer module 10 in the display zone 69, and display the status bar of second computer module 11 in the display zone 70, and display the execution information of the second computer module 11 in the display zone 71. Therefore, the user can view the main frames and status bars of the first computer module 10 and the second computer module 11 at the same time.

## Claims

1. A dual-network dual-system mobile device (1) comprising:
a mobile network module (13) utilized to be connected to a mobile network (32);
a transfer station module (12) electronically connected to the mobile network module (13), the transfer station module (12) estiblishing a first network channel with a first access point (20) via the mobile network module (13), and estiblishing a second network channel with a second access point (21) via the mobile network module (13), wherein the first network channel and the second network channelis are virtually isolated from each other;
a first computer module (10) electronically connected to the transfer station module (12);
a second computer module (11) electronically connected the transfer station module (12);
a switch module (14) electronically connected to the first computer module (10) and the second computer module (11);
a human-machine interface (HMI) (15) electronically connected to the switch module (14); and
a case (50) at least partially covering the mobile network module (13), the transfer station module (12), the first computer module (10), the second computer module (11), the switch module (14) and the HMI (15) to provide protection;
wherein the switch module (14) is utilized to electronically switch the HMI (15) to the first computer module (10) when the switch module (14) receives a first switching signal so that the HMI (15) is utilized to interact with the first computer module (10), and electronically switch HMI (15) to the second computer module (11) when the switch module (14) receives a second switching signal so that the HMI (15) is utilized to interact with the second computer module (11),
wherein the transfer station module (12) is configured to enable the first computer module (10) to communicate externally via the first network channel, and enable the second computer module (11) to only communicate externally via the second network channel.

2. The dual network dual system mobile device (1) of claim 1, wherein the first computer module (10) comprises:
a first main memory (101);
a first storage (102) storing a first operating system (103); and
a first processor (100) electronically connected to the first main memory (101) and the first storage (102), the first processor (100) being configured to upload the first operating system (103) into the first main memory (101) and run the first operating system (103);
wherein the second computer module (11) comprises:
a second main memory (111);
a second storage (112) storing a second operating system (113); and
a second processor (110) electronically connected to the second main memory (111) and the second storage (112), the second processor (110) being configured to upload the second operating system (113) into the second main memory (111) and run the second operating system (113).

3. The dual network dual system mobile device (1) of claim 1 or 2, wherein the first computer module (10) further comprises:
a first transceiver (104) ielectronically connected to the first processor (100) and the transfer station module (12); and
a first I/O controller (105) electronically connected to the first processor (100) and the switch module (14), and utilized to control the HMI (15);
wherein the second computer module (11) also comprises
a second transceiver (114) electronically connected to the second processor (110) and the transfer station module (12); and
a second I/O controller (115) electronically connected to the second processor (110) and the switch module (14), and utilized to control the HMI (15).

4. The dual-network dual-system mobile device (1) of any one of claims 1 to 3, wherein the mobile network module (13) comprises a connector (130), the connector (130) is utilized to be connected to an external wireless data modem 40 via a transmission cable, and the mobile network module (13) is connected to the mobile network (32) via the wireless data modem (40).

5. The dual-network dual-system mobile device (1) of any one of claims 1 to 4, wherein the transfer station module (12) is configured with and allocates a first access point parameter to the first computer module (10) and allocates a second access point parameter to the second computer module (11), the transfer station module (12) is connected to the first access point (20) based on the first access point parameter, and is connected to the second access point (21) based on the second access point parameter, the first access point parameter is utilized to be an address indicating the first access point (20) connected to the Internet (30), the second access point parameter is utilized to be an address indicating the second access point (21) connected to a private network (31).

6. The dual-network dual-system mobile device (1) of claim 5, wherein the mobile network module (13) configured with a user identity recognition module (131) is connected to the mobile network (32) by running the user identity recognition module (131).

7. The dual-network dual-system mobile device (1) of claim 6, wherein the transfer station module (12) is utilized to obtain a network access point information from the user identity recognition module (131), and is configured with the first access point parameter based on the network access point information.

8. The dual-network dual-system mobile device (1) of claim 7, wherein the HMI (15) is configured to receive a new access point operation, and the transfer station module (12) is configured with and allocates the second access point parameter based on the newly added access point operation, and the transfer station module (12) issues an alert via the HMI (15) when detecting that the second access point (21) indicated by the second access point parameter, which is allocated to the second computer module (11), is connected with the Internet (30).

9. The dual-network dual-system mobile device (1) of any one of claims 1 to 8, further comprising a switch interface (140) electronically connected to the switching module (14), wherein the switching Interface (140) is utilized to receive a switching operation and correspondingly trigger the first switching signal or the second switching signal.

10. The dual-network dual-system mobile device (1) of claim 9, wherein the switching interface (140) is a physical key or a proximity sensor, and is utilized to cyclically trigger the first switching signal and second switching signal in sequence when an object is pressed or sensed, the HMI (15) comprises an input component (150) and an output component (151).

11. The dual-network dual-system mobile device (1) of claim 10, wherein the output component (151) is a display component, the switch module (14) receiving the first switching signal is controlled to electronically switch the HMI (15) to the first computer module (10), then the output component (151) is controlled to display a main frame of the first computer module (10) in the display zone (64), and a status bar of the first computer module (10) in another display zone (62), and a status bar of second computer module (11) in another display zone (63).

12. The dual-network dual-system mobile device (1) of claim 11, wherein the switch module (14) receiving the second switching signal is controlled to electronically switch the HMI (15) to the second computer module (11), then the output component (151) is controlled to display the main frame of the second computer module (11) in the display zone (67), and the status bar of the second computer module (11) in another display zone (65), and the status bar of first computer module (10) in another display zone (66).

13. The dual-network dual-system mobile device (1) of claim 12. wherein the switching interface (140) is utilized to cyclically trigger the first switching signal, the second switching signal and a third switching signal in sequence, the switch module (14) receiving the third switching signal is controlled to electronically switch the HMI (15) to the first computer module (10) or the second computer module (11), then the output component (151) is controlled to display the main frame of the first computer module (10) in the display zone (69), and the status bar of the first computer module (10) in another display zone (68), and the main frame of second computer module (11) in another display zone (71) and the status bar of second computer module (11) in another display zone (70).

14. The dual-network dual-system mobile device (1) of any one of claims 1 to 13, wherein the switch module (14) comprises an output switching circuit (141) and an input switching circuit (142), one endpoint of output switch circuit (141) is connected to the output component (151) of the HMI (15), and the other endpoint of output switch circuit (141) is connected to the output endpoint of the first computer module (10) and the second computer module (11), one endpoint of the input switch circuit (142) is connected to the input component (150) of the HMI (15), and the other endpoint of the input switch circuit (142) is connected to the input endpoint of the first computer module (10) and the second computer module (11).

15. The dual-network dual-system mobile device (1) of any one of claims 1 tol4, wherein the HMI (15) comprises a display component, the dual-network dual-system mobile device (1) further comprises a controller module (16), the controller module (16) is utilized to obtain the status information from the first computer module (10) and the second computer module (11); to control the display component to display the status information of the second computer module (11) in one of display zones (60-71) when the HMI (15) is electronically switched to the first computer module (10) by the switch module (14); to control the display component to display the status information of the first computer module (10) in another of display zones (60-71) when the HMI (15) is electronically switched to the second computer module (11) by the switch module (14).
